Europäisches Patentamt

European Patent Office

Office européen des brevets

(11) Veröffentlichungsnummer: **0 261 477**
**A1**

(12) **EUROPÄISCHE PATENTANMELDUNG**

(21) Anmeldenummer: **87112913.6**

(22) Anmeldetag: **04.09.87**

(51) Int. Cl.4: **C10B 53/00 , H05H 1/48 , H05H 1/42**

(30) Priorität: **23.09.86 CH 3809/86**

(43) Veröffentlichungstag der Anmeldung:
**30.03.88 Patentblatt 88/13**

(84) Benannte Vertragsstaaten:
**CH DE FR GB LI SE**

(71) Anmelder: **BBC Brown Boveri AG**

**CH-5401 Baden(CH)**

(72) Erfinder: **Niemeyer, Lutz, Dr.**
**Huunenweg 454**
**CH-5242 Birr(CH)**
Erfinder: **Wiegart, Norbert, Dr.**
**Im Eichtal 5**
**CH-5400 Baden(CH)**

(54) **Plasmareaktor.**

(57) Der zum Pyrolysieren von Abfallstoffen vorgesehene Plasmareaktor weist eine in einem gasdichten Reaktorgehäuse (1) befindliche Lichtbogenkammer (2) auf. Das Reaktorgehäuse (1) weist Einlässe (7, 8) zum Zuführen von Abfallstoffen (12) und eines Arbeitsgases ins Innere des Reaktorgehäuses (1) sowie einen Auslass (9) zum Abführen von pyrolysierten Abfallstoffen auf. In der Lichtbogenkammer (2) befinden sich zwei Elektroden (4, 5) zur Aufnahme der Fusspunkte eines die Pyrolyse der Abfallstoffe (12) bewirkenden und im Arbeitsgas brennenden Lichtbogens (23). Dieser Plasmareaktor soll zur Entsorgung fester und flüssiger Abfallstoffe geeignet sein und sich durch eine hohe Durchlaufgeschwindigkeit der zu entsorgenden Abfallstoffe (12) und einen hohen Wirkungsgrad auszeichnen. Dies wird dadurch erreicht, dass im Reaktorgehäuse (1) zusätzlich ein die zu entsorgenden Abfallstoffe (12) aufnehmendes Verdampfungsgefäss (6) vorgesehen ist zur Bildung von verdampften Abfallstoffen unter der Wirkung des mindestens einen Lichtbogens, und dass dieses Verdampfungsgefäss (6) von der Lichtbogenkammer (2) durch eine wärmeaustauschende Wand getrennt und mit der Lichtbogenkammer (2) über mindestens eine Rohrleitung (21) verbunden ist.

FIG.1

# Plasmareaktor

## Technisches Gebiet

Bei der Erfindung wird ausgegangen von einem Plasmareaktor zum Pyrolysieren von Abfallstoffen mit mindestens einer in einem gasdichten Reaktorgehäuse befindlichen Lichtbogenkammer, einem ersten Einlass zum Zuführen von Abfallstoffen ins Innere des Reaktorgehäuses, einen zweiten Einlass zum Zuführen eines Arbeitsgases ins Innere des Reaktorgehäuses, einem ersten Auslass zum Abführen von pyrolysierten Abfallstoffen aus dem Reaktorgehäuse und mit mindestens zwei in der Lichtbogenkammer befindlichen Elektroden zur Aufnahme der Fusspunkte mindestens eines die Pyrolyse der Abfallstoffe bewirkenden und im Arbeitsgas brennenden Lichtbogens.

Hierbei nimmt die Erfindung auf einen Stand der Technik Bezug, wie er beschrieben ist im Aufsatz "Mobile Plasma Pyrolysis" von T.G. Barton in Hazardous Waste 1 (1984), S. 237-247. Beim bekannten Plasmareaktor werden die aufzubereitenden Abfallstoffe in flüssiger Form in eine Lichtbogenkammer des Plasmareaktors eingeführt, verdampft und der verdampfte Abfallstoff vor dem Austreten aus der Lichtbogenkammer von einem in einem Arbeitsgas brennenden Lichtbogen atomisiert. Durch geeignete Betriebsbedingungen kann hierbei das Entstehen unerwünschter Zerfallsprodukte weitgehend vermieden werden. Der Durchsatz von aufzubereitenden Abfallstoffen ist jedoch vergleichsweise gering, da ein erheblicher Teil der Aufenthaltsdauer der Abfallstoffe in der Lichtbogenkammer auf den Verdampfungsprozess entfällt. Darüber hinaus können feste, unzerkleinerte Abfallstoffe in einem solchen Plasmareaktor nicht verarbeitet werden und geht zudem ein beträchtlicher Anteil der zugeführten elektrischen Energie durch Wasserkühlung der Elektroden der Lichtbogenkammer verloren.

## Darstellung der Erfindung

Die Erfindung, wie sie in den Patentansprüchen angegeben ist, löst die Aufgabe, einen Plasmareaktor der eingangs genannten Art anzugeben, der zur Entsorgung fester und flüssiger Abfallstoffe geeignet ist und sich zugleich durch eine hohe Durchlaufgeschwindigkeit der zu entsorgenden Abfallstoffe und einen hohen Wirkungsgrad auszeichnet.

Kurze Beschreibung der Erfindung Die Erfindung wird nachfolgend anhand von in der Zeichnung dargestellten Ausführungsbeispielen näher erläutert. Hierbei zeigt:

Fig. 1 eine erste Ausführungsform eines Plasmareaktors nach der Erfindung und

Fig. 2 eine zweite Ausführungsform eines Plasmareaktors nach der Erfindung.

In den Figuren sind gleichwirkende Teile mit gleichen Bezugzeichen versehen. 1 bezeichnet ein aus einem iso lierenden, lichtbogenbeständigen Material bestehendes Gehäuse eines Plasmareaktors. Diese Gehäuse 1 begrenzt eine Lichtbogenkammer 2 mit zwei von einer Stromquelle 3 gespeisten Elektroden 4 und 5 und schliesst ein mit Abstand von der Elektrode 4 angeordnetes Verdampfungsgefäss 6 ein, dessen Boden aus Graphit, Wolfram oder irgendeinem anderen elektrisch und thermisch leitfähigen und lichtbogenbeständigen Material besteht und von der Elektrode 5 gebildet ist.

Das Gehäuse 1 weist Einlässe 7 und 8 sowie Auslässe 9 und 10 auf. Der Einlass 7 ist einerseits über ein Dosierventil 11 mit einem ausserhalb des Plasmareaktors befindlichen und Abfallstoffe in flüssiger Form enthaltenden Speicherraum 13 verbunden und andererseits über eine Rohrleitung 14 mit dem Verdampfungsgefäss 6. Der Einlass 8 steht einerseits über eine durch einen Wärmeaustauscher 15 geführte Rohrleitung 16 und ein Dosierventil 17 mit einem ausserhalb des Plasmareaktors angeordneten, nicht dargestellten Druckspeicher 18 für ein Arbeitsgas, wie etwa Argon, in Verbindung und ist andererseits in das Verdampfungsgefäss 6 geführt. Der Auslass 9 führt aus der Lichtbogenkammer 2 über eine ebenfalls durch den Wärmeaustauscher 15 geführte Rohrleitung 19 sowie gegebenenfalls vorgesehene, in der Zeichnung nicht dargestellte, Staubfilter und Gaswaschanlagen ins Freie. Der Auslass 10 ist mit dem Inneren des Verdampfungsgefässes 6 und einem ausserhalb des Plasmareaktors vorgesehenen Absperrventil 20 verbunden.

In der Lichtbogenkammer 2 befindet sich eine Rohrleitung 21, welche einen vom Verdampfungsgefäss 6 umschlossenen Gasraum 22 mit der Lichtbogenkammer 2 im Bereich der Elektrode 4 verbindet.

Die Wirkungsweise eines solchen Plasmareaktors ist nun wie folgt:

Dem Verdampfungsgefäss 6 wird über das Dosierventil 11 eine geeignete Menge an Abfallstoffen zugeführt, welche Abfallstoffe etwa eine toxische Flüssigkeit sein können. Da der Boden des Verdampfungsgefässes 6 als Elektrode 5 ausgebildet ist und bei Betrieb des Plasmareaktors einen Fusspunkt eines zwischen den Elektroden 4 und 5 brennenden Lichtbogens 23 aufnimmt, werden die zugeführten flüssigen Abfallstoffe von der Elektrode 5 aufgeheizt und verdampfen. Nicht verdampfbare Bestandteile können sich auf dem Boden des Verdampfungsgefässes 6 sammeln und können nach Oeffnen des Absperrventils 20 bei Bedarf über den Auslass 10 aus dem Plasmareaktor entfernt werden. Die im Gasraum 22 verdampften Abfallstoffe werden über die Rohrleitung 21 an die Elektrode 4 geführt, zugleich wird auch das im Dosierventil 17 quantitativ geeignet bemessene und im Wärmeaustauscher 15 erhitzte Arbeitsgas über die Rohrleitung 21 an die Elektrode 4 geführt. Der zwischen den Elektroden 4 und 5 brennende und von der Stromquelle 3 gespeiste Lichtbogen 23 pyrolysiert die verdampften Abfallstoffe vollständig. Das hierbei entstehende Pyrolysegas besteht überwiegend aus unschädlichen atomisierten und molekularen Zersetzungsprodukten der Abfallstoffe und wird über den Auslass 9 entgegen der Richtung des Arbeitsgases durch den Wärmeaustauscher 15 geführt. Hierbei gibt es seine Wärme über den Wärmaustauscher 15 an das dem Plasmareaktor zugeführte Arbeitsgas ab.

Die zugeführte elektrische Leistung für den Lichtbogen 23 und die zugeführten Mengen an Arbeitsgas bzw. Abfallstoffen sind hierbei so bemessen, dass die Stöchiometrie des Pyrolysegases und des Arbeitsgases und das Verhältnis von elektrischer Leistung und Gesamtmassenumsatz durch den Plasmareaktor und damit die Gastemperatur in der Lichtbogenkammer 2 auf einem gewünschten Wert gehalten werden. Dabei empfiehlt es sich, im Inneren von Lichtbogenkammer 2 und Verdampfungsgefäss 6 Druck-und Temperatursensoren vorzusehen, welche über eine nicht dargestellte Steuervorrichtung auf Stromquelle 3 und die Dosierventile 11 und 17 wirkt.
Ein solcher Plasmareaktor zeichnet sich bei einer hohen Durchlaufgeschwindigkeit durch einen gegenüber einem vergleichbaren Plasmareaktor nach dem Stand der Technik um ca. 10 bis 20 % höheren Wirkungsgrad aus.

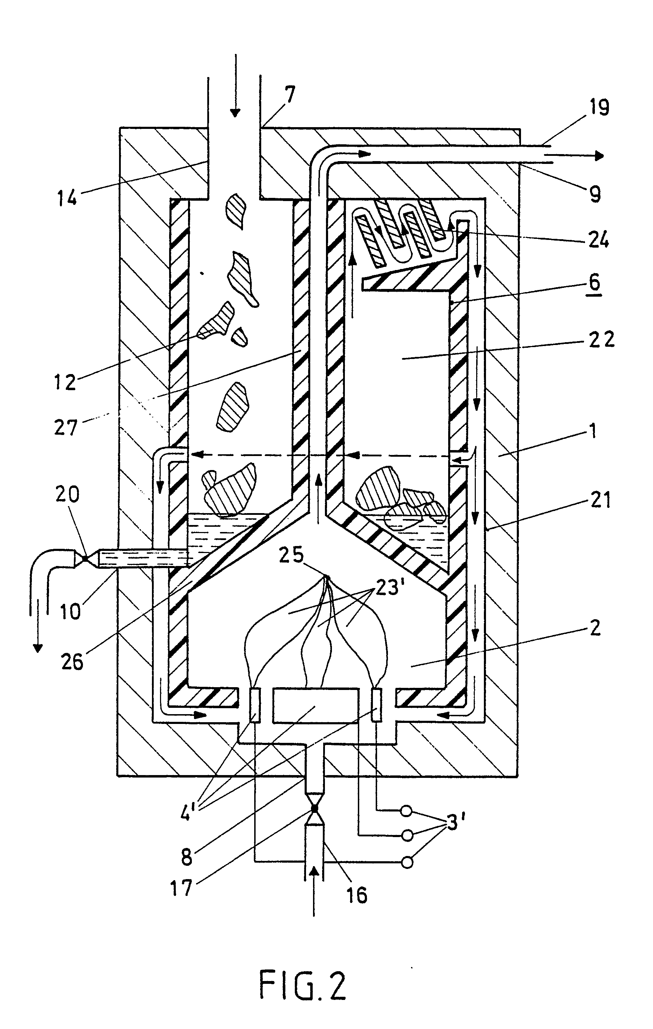

Bei dem in Fig. 2 dargestellten Plasmareaktor sind in der Lichtbogenkammer 2 drei jeweils mit einer Phase einer dreiphasigen Stromquelle 3' verbundene Elektroden 4' angeordnet. Die drei Elektroden 4' nehmen jeweils Fusspunkte dreier einen gemeinsamen Plasmasternpunkt 25 aufweisender Lichtbögen 23' auf. Ueber dem Plasmasternpunkt 25 ist das nunmehr Kaminform aufweisende und durch eine wärmeaustauschende Wand 26 von der Lichtbogenkammer 2 abgetrennte Verdampfungsgefäss 6 angeordnet. Da bei diesem Plasmareaktor das Verdampfungsgefäss 6 keinen Bogenfusspunkt aufnehmen muss, kann das Verdampfungsgefäss 6 insbesondere aus einem gut wärmeleitenden Isoliermaterial, wie etwa Siliciumcarbid oder Aluminiumnitrid, bestehen.

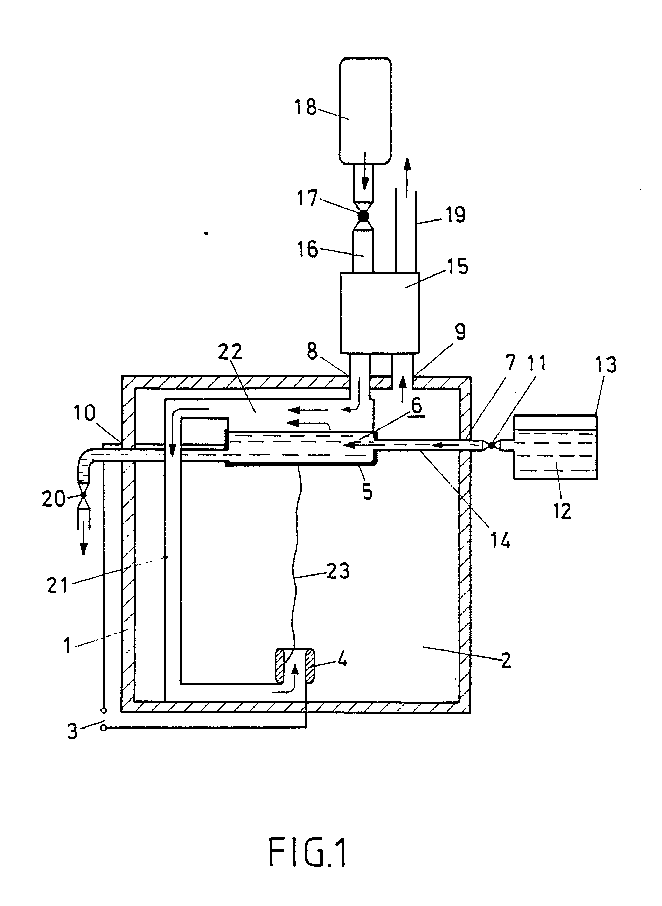

Bei diesem Plasmareaktor werden die in fester Form in das Verdampfungsgefäss 6 geführten Abfallstoffe 12 durch Konvektion der von den Lichtbögen 23' aufgeheizten Gase und durch Wärmeleitung der nicht auf das Verdampfungsgefäss 6 übertragenen Lichtbögen 23' aufgeschmolzen und die Schmelze nachfolgend teilweise verdampft. Die verdampften Abfallstoffe treten durch einen Entstauber 24, in dem gegebenenfalls vorhandene Staubpartikel zurückgehalten werden. Nachfolgend gelangen die von Staubpartikeln gereinigten verdampften Abfallstoffe in die Lichtbogenkammer 2, wo sie in den im Arbeitsgas brennnenden Lichtbögen 23' pyrolysiert werden. Das entstehende Pyrolysegas streicht an den einen zentralen Kamin begrenzenden Wänden des Verdampfungsgefässes 6 nach oben und gibt hierbei nach dem Gegenstromprinzip einen Teil seiner Wärme über eine den Kamin bildende und zum Auslass 9 geführte Verbindungsleitung 27 an die in das Verdampfungsgefäss 6 eingeführten festen Abfallstoffe 12 ab. Ein weiterer Teil der Wärme des Pyrolysegases kann entsprechend dem Plasmareaktor gemäss Fig. 1 über einen ausserhalb des Plasmareaktors befindlichen Wärmeaustauscher zur Aufheizung des Arbeitsgases verwendet werden.

Ein solcher Plasmareaktor ist bevorzugt zur Entsorgung von festen Abfallstoffen geeignet und weist einen besonders hohen Wirkungsgrad auf. In einer anderen Ausführungsform kann ein solcher Plasmareaktor auch eine als Sternpunktelektrode ausgebildete wärmeaustauschende Wand 26 aufweisen, welche zur Stabilisierung des Sternpunktes je einen der drei Lichtbögen 23' aufnehmen kann.

## Ansprüche

1. Plasmareaktor zum Pyrolysieren von Abfallstoffen mit mindestens
-einer in einem gasdichten Reaktorgehäuse (1) befindlichen Lichtbogenkammer (2),
-einem ersten Einlass (7) zum Zuführen von Abfallstoffen ins Innere des Reaktorgehäuses (1),
-einem zweiten Einlass (8) zum Zuführen eines Arbeitsgases ins Innere des Reaktorgehäuses (1),
-einem ersten Auslass (9) zum Abführen von pyrolysierten Abfallstoffen aus dem Reaktorgehäuse (1) undmit mindestens
- zwei in der Lichtbogenkammer (2) befindliche Elektroden (4, 4', 5) zur Aufnahme der Fusspunkte mindestens eines die Pyrolyse der Abfallstoffe bewirkenden Lichtbogens (23, 23'),

dadurch gekennzeichnet, dass im Reaktorgehäuse (1) zusätzlich ein mit dem ersten Einlass (7) verbundenes Verdampfungsgefäss (6) vorgesehen ist zur Bildung von verdampften Abfallstoffen unter der Wirkung des mindestens einen Lichtbogens (23, 23'), und dass dieses Verdampfungsgefäss (6) von der Lichtbogenkammer (2) durch eine wärmeaustauschende Wand (26) getrennt und mit der Lichtbogenkammer (2) über mindestens eine Rohrleitung verbunden ist.

2. Plasmareaktor nach Anspruch 1, dadurch gekennzeichnet, dass das Verdampfungsgefäss (6) zumindest teilweise von einer (5) der mindestens zwei Elektroden (4, 5) gebildet ist.

3. Plasmareaktor nach Anspruch 1, dadurch gekennzeichnet, dass das Verdampfungsgefäss (6) zumindest teilweise aus elektrisch isolierendem Material besteht und kon vektiv und durch Wärmeleitung heizbar ist.

4. Plasmareaktor nach einem der Ansprüche 1 bis 3, dadurch gekennzeichnet, dass das Reaktorgehäuse (1) einen mit dem Verdampfungsgefäss (6) verbundenen zweiten Auslass (10) zum Abführen nicht verdampfter Komponenten der Abfallstoffe aufweist.

5. Plasmareaktor nach Anspruch 4, dadurch gekennzeichnet, dass der zweite Einlass (8) mit dem Verdampfungsgefäss (6) verbunden ist.

6. Plasmareaktor nach Anspruch 5, dadurch gekennzeichnet, dass dem zweiten Einlass (8) ein vom Arbeitsgas durchströmter Wärmeaustauscher (15) vorgeschaltet ist, welcher entgegengesetzt zur Strömungsrichtung des Arbeitsgases von dem aus dem ersten Auslass (9) austretenden pyrolysierten Abfallstoffen durchströmt ist.

7. Plasmareaktor nach Anspruch 1, dadurch gekennzeichnet, dass in der Lichtbogenkammer (2) drei jeweils mit einer Phase einer dreiphasigen Stromquelle (3') verbundene Elektroden (4') angeordnet sind, welche jeweils einen der Fusspunkte dreier einen Plasmasternpunkt (25) aufweisenden Lichtbögen (23') aufnehmen.

8. Plasmareaktor nach Anspruch 1, dadurch gekennzeichnet, dass in der Lichtbogenkammer (2) drei jeweils mit einer Phase einer dreiphasigen Stromquelle (3') verbundene Elektroden (4') angeordnet sind, und dass die wärmeaustauschende Wand (26) des Verdampfungsgefässes (6) als Sternpunktelektrode zur Aufnahme je eines der drei Lichtbögen (23') ausgebildet ist.

9. Plasmareaktor nach einem der Ansprüche 7 oder 8, dadurch gekennzeichnet, dass das Verdampfungsgefäss (6) mit dem ersten Auslass (9) über eine Wärme an das Verdampfungsgefäss (6) abgebende Verbindungsleitung (27) kommuniziert.

FIG.1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | HAZARDOUS WASTE, Band 1, Nr. 2, 1984, Seiten 237-247, Mary Ann Liebert Inc., Publisher; T.G. BARTON: "Mobile plasma pyrolysis" * Seite 237, Auszug; Seite 239, Figur 1 * | 1 | C 10 B 53/00 H 05 H 1/48 H 05 H 1/42 |
| | --- | | |
| A | CH-A- 89 332 (MASCHINENFABRIK OERLIKON) * Seite 1, linke Spalte, Zeilen 12-14; Figur 1 * | 1 | |
| | --- | | |
| A | EP-A-0 096 538 (ELECTRO-PETROLEUM INC.) * Auszug; Figuren 1,2 * | 1 | |
| | ----- | | |

RECHERCHIERTE SACHGEBIETE (Int. Cl.4)

C 10 B
H 05 B
F 23 G
B 01 J
H 05 H

Der vorliegende Recherchenbericht wurde für alle Patentansprüche erstellt.

| Recherchenort | Abschlußdatum der Recherche | Prüfer |
|---|---|---|
| DEN HAAG | 01-11-1987 | WINKELMAN,A.M.E. |

EPA Form 1503 03 82

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmendes Dokument